# EUROPÄISCHE PATENTANMELDUNG

(11) **EP 1 837 309 A1**
(43) Veröffentlichungstag der Anmeldung: **26.09.2007**
(21) Anmeldenummer: 07001604.3
(22) Anmeldetag: 25.01.2007
(51) Int. Cl.: C02F 1/32

(54) **Vorrichtung zur Behandlung eines strömenden Fluids**

(30) Priorität: 22.03.2006 DE 102006013604
(71) Anmelder: Wedeco AG, 32051 Herford (DE)
(72) Erfinder: Sief, Rolf, 33602 Bielefeld (DE); Hunze, Michaela, Dr., 30419 Hannover (DE); Krüger, Friedhelm, 32657 Lemgo (DE)
(74) Vertreter: Lenzing, Andreas

(57) **Zusammenfassung**

Die Erfindung betrifft eine Vorrichtung zur Behandlung eines strömenden Fluids, insbesondere Wasser, umfassend ein Gehäuse (1) mit einem Einlass (2) zur Zuführung des Fluids und einem Auslass (3) zur Abführung des Fluids, ein Element (4) zur Erzeugung von Strahlung, insbesondere UV-Strahlung, wobei die Strahlung zumindest auf einen Teil des strömenden Fluids einwirkt, und ein Mittel (7) zur Beeinflussung der Fluidströmung innerhalb des Gehäuses (1), wobei das Mittel (7) zur Beeinflussung der Fluidströmung als Modul mit einer Mehrzahl von strukturierten Blechen (8) ausgebildet ist.

## Beschreibung

Die Erfindung betrifft eine Vorrichtung zur Behandlung eines strömenden Fluids nach dem Oberbegriff des Anspruchs 1 sowie die Verwendung einer strukturierten Packung als Mittel zur Beeinflussung der Strömung von Wasser.

Aus dem Stand der Technik sind Anlagen zur Desinfizierung von Wasser, insbesondere Trinkwasser, bekannt, bei denen der Wasserstrom durch ein Gehäuse geleitet wird, wobei in Längsrichtung des Gehäuses eine Mehrzahl von stabförmigen UV-Röhren angeordnet sind. Durch die UV-Strahlung der Röhren werden in dem Wasser enthaltene Keime abgetötet. Bei den praxisüblichen Volumenströmen und Durchmessern dieser Anlagen zur UV-Desinfektion ergeben sich Probleme hinsichtlich der Homogenität des Wasserstroms. So gibt es Bereiche von schneller und von langsamer Strömung. Um eine sichere Desinfizierung des gesamten Wasserstroms zu gewährleisten werden daher Turbulenzscheiben eingesetzt. Hierbei handelt es sich um quer über den Strömungsweg erstreckte Bleche mit kleineren Durchbrechungen, wobei der Wasserstrom die Durchrechungen hochgradig turbulent durchströmt. Diese Bleche stellen einen erheblichen Strömungswiderstand dar und sind als Spezialteile kostenintensiv in der Herstellung.

Es ist die Aufgabe der Erfindung, eine Vorrichtung zur Behandlung eines strömenden Fluids anzugeben, deren Funktionsweise hinsichtlich einer Homogenität der Strömung auf kostengünstige Weise optimiert ist.

Diese Aufgabe wird für eine eingangs genannte Vorrichtung erfindungsgemäß mit den kennzeichnenden Merkmalen des Anspruchs 1 gelöst. Durch die Mehrzahl von strukturierten Blechen, die als ein Modul ausgebildet sind, kann die Homogenisierung des Fluidstroms auf einfache Weise erzielt werden. Bevorzugt sind dabei die Bleche im wesentlichen parallel zueinander angeordnet, wobei eine Hauptströmungsrichtung des Fluids im wesentlichen parallel zu den Blechen verläuft. Hierdurch lässt sich eine sehr gute Vergleichmäßigung des Fluidstroms bei besonders geringen Strömungswiderstand des Mittels zur Beeinflussung der Fluidströmung erzielen. Zur einfachen Integration in gängige Anlagen, insbesondere rohrförmige Gehäuse, ist vorteilhaft eine einhüllende äußere Form des Moduls im wesentlichen zylindrisch.

Im Interesse einer einfachen Fertigung sind die strukturierten Bleche als Streckmetall-Bleche ausgebildet. Gute Ergebnisse bei der Vergleichmäßigung der Strömung unter Berücksichtigung eines geringen Strömungswiderstands wurden erzielt, wenn die Streckmetall-Bleche im wesentlichen rhombenförmige Öffnungen aufweisen. Bevorzugt weisen die Streckmetall-Bleche Stege auf, die gegenüber einer Hauptebene der Bleche verwunden sind. Hierdurch lässt sich auf einfache Weise eine Durchmischung verschiedener Strömungsbereiche des Fluids bei geringem Druckabfall erzielen.

Allgemein vorteilhaft bewirken die Bleche eine Strömungstrennung eines Hauptstroms des Fluids in mehrere Teilströme, deren Umlenkung und abschließende Zusammenführung. Hierdurch wird eine Vergleichmäßigung des Fluidstroms erreicht, ohne dass unnötig viele lokale Turbulenzen in den Fluidstrom eingebracht werden.

In besonderem Maße vorteilhaft ist die Vorrichtung eine UV-Desinfektionsanlage zur Behandlung von Trinkwasser. Hierbei kommt es in besonderem Maße auf eine gute Vergleichmäßigung des Fluidstroms an, um eine kontrolliert vollständige Desinfektion zu erreichen. Vorteilhaft beträgt der Trinkwasserstrom dabei in einem normalen Betriebszustand wenigstens etwa 10 Kubikmeter pro Stunde, wobei der gesamte Druckabfall des Trinkwasserstroms über der Vorrichtung weniger als etwa 100 mbar beträgt.

Im Interesse einer einfachen Herstellung ist das Gehäuse im wesentlichen zylindrisch, wobei der Einlass und der Auslass an entgegengesetzten Endbereichen des Zylinders angeordnet sind. Alternativ kann die Gehäuseform jedoch beliebig sein, wobei die Mittel zur Beeinflussung der Strömung regelmäßig zwischen dem Einlass und den Elementen zur Erzeugung von Strahlung angeordnet sein werden.

Zweckmäßig ist das Element zur Erzeugung von Strahlung eine im wesentlichen stangenförmige UV-Röhre, die im wesentlichen entlang einer Hauptströmungsrichtung des Fluids orientiert ist. Hierdurch lässt sich eine ausreichend hohe Strahlendosis bei relativ kleiner Anzahl von strahlungserzeugenden Elementen realisieren. Alternativ können die UV-Röhren aber je nach Gehäusebauart auch senkrecht oder in einem sonstigen Winkel zu der Hauptströmungsrichtung des Fluids angeordnet sein.

In besonders bevorzugter Ausführung umfassen die Mittel zur Beeinflussung der Fluidströmung eine strukturierte Packung für Absorptionskolonnen und/oder Extraktionskolonnen und/oder Rektifizierkolonnen. Solche strukturierte Packungen werden zu anderen als den vorliegenden Zwecken in großem Umfang in Industrieanlagen, insbesondere Destillationsanlagen, eingesetzt. Versuche haben gezeigt, dass solche Elemente ohne oder mit nur wenigen Änderungen besonders gut geeignet sind, einen Fluidstrom zu homogenisieren.

Insbesondere für gängige Anlagen zur Trinkwasserdesinfektion haben die Packungen bevorzugt eine Oberfläche von etwa 100 m² bis etwa 500 m² pro Kubikmeter Volumen. Insbesondere bevorzugt beträgt diese Oberfläche zwischen etwa 100 m² und etwa 200 m² pro Kubikmeter Volumen. Es hat sich gezeigt, dass hierbei ein guter Kompromiss hinsichtlich der Vereinheitlichung der Strömung und dem hieraus resultierenden Druckabfall vorliegt. Zudem kann es bei der gegebenen Strukturdichte erreicht werden, dass zumindest weite Teile der Oberflächen der Packung von der desinfizierenden Strahlung erreicht werden. Hierdurch wird sichergestellt, dass trotz der relativ großen Oberfläche auch bei dauerhaftem Betrieb keine Algenbildung oder sonstige Keimansammlung auf den Packungen entstehen kann.

Allgemein bevorzugt bestehen die strukturierten Bleche aus einem nicht-korrosiven Material, insbesondere trinkwassergeeignetem Edelstahl. Vorteilhaft kann zumindest die Oberfläche der Bleche ein keimtötendes Material, insbesondere Silber, umfassen. Hierdurch ergeben sich Vorteile insbesondere beim Einsatz im Trinkwasserbereich.

Die Aufgabe der Erfindung wird zudem dadurch gelöst, dass eine strukturierte Packung für Absorptionskolonnen und/oder Extraktionskolonnen und/oder Rektifizierkolonnen als Mittel zur Beeinflussung der Strömung von Trinkwasser in einer Vorrichtung zur Desinfizierung des Trinkwassers mittels UV-Strahlung verwendet wird. Hierdurch wird bei geringen Kosten die Funktionsweise der Anlage verbessert, wobei insbesondere eine gute Vergleichmäßigung des Trinkwasserstroms bei geringem Druckabfall durch die strömungsbeeinflussenden Mittel gegeben ist. Derartige Packungen sind aus dem Stand der Technik für den Einsatz in Systemen bekannt, bei denen verschiedene Phasen vorliegen, die über eine möglichst große Oberfläche in Kontakt stehen sollen. Diese Packungen sind daher nicht dafür bekannt, dass sie zur Homogenisierung einer Fluidströmung geeignet sind. Die der Erfindung zugrundeliegenden Versuche haben den überraschenden Effekt gezeigt, dass die Kombination solcher Kolonnenpackungen mit Trinkwasser-Desinfektionsanlagen bei geringen Kosten eine deutliche Verbesserung der Funktion der Desinfektionsanlagen ergibt.

Strukturierte Packungen, die einem strömungsbeeinflussenden Mittel im Sinne der vorliegenden Erfindung entsprechen, sind insbesondere in der Druckschrift EP 0 069 241 B1 hinsichtlich ihrer Form und ihrer Herstellung ausführlich beschrieben. Diese Druckschrift wird hiermit ausdrücklich in den Umfang der Offenbarung der vorliegenden Erfindung aufgenommen.

Weitere Vorteile und Merkmale der Erfindung ergeben sich aus dem nachfolgend beschriebenen Ausführungsbeispiel sowie aus den abhängigen Ansprüchen. Nachfolgend wird ein bevorzugtes Ausführungsbeispiel einer erfindungsgemäßen Vorrichtung beschrieben und anhand der anliegenden Zeichnungen näher erläutert.
- Fig. 1: zeigt eine räumliche Darstellung einer erfindungsgemäßen Vorrichtung.
- Fig. 2: zeigt eine schematisierte fotografische Darstellung eines Mittels zur Beeinflussung einer Fluidströmung gemäß der vorliegenden Erfindung.
- Fig. 3: zeigt einen schematisch dargestellten Ausschnitt aus einem Mittel zur Beeinflussung einer Fluidströmung gemäß Fig. 2.

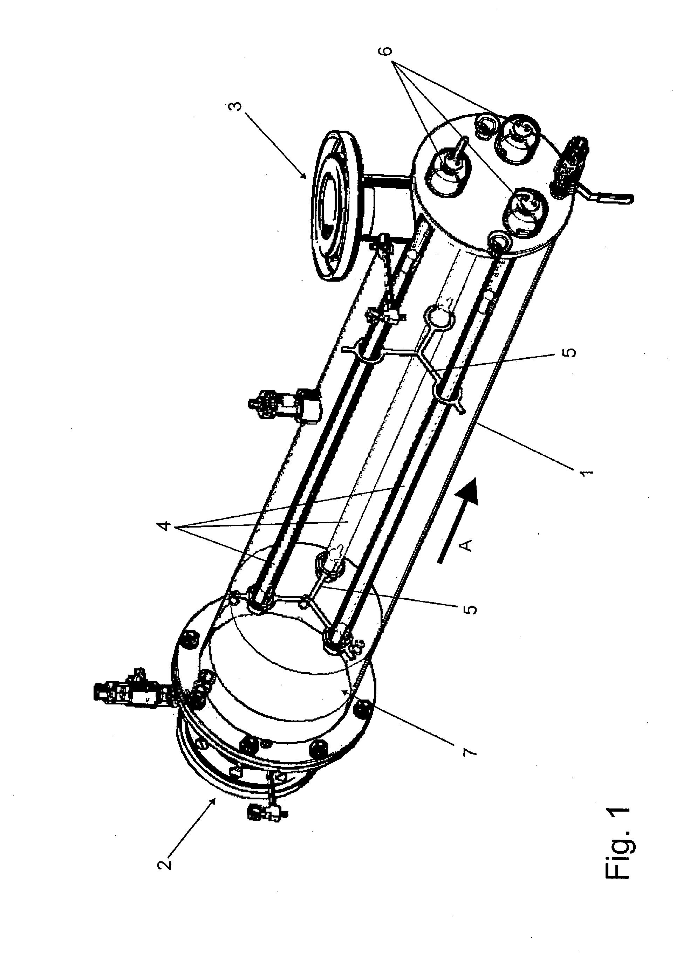

Fig. 1 zeigt eine Vorrichtung zur Desinfizierung von Trinkwasser mittels UV-Strahlung. Die Vorrichtung umfasst ein rohrartiges, im wesentlichen zylindrisches Gehäuse 1, welches an einem Endbereich einen Einlass 2 und am gegenüberliegenden Endbereich einen Auslass 3 aufweist. Innerhalb des Gehäuses 1 sind drei längliche UV-Röhren 4 parallel zueinander und in Längsrichtung des Gehäuses 1 orientiert angeordnet, wobei die Röhren über dünne stegartige Haltemittel 5 weitgehend schwebend in dem Gehäuse 1 positioniert und gehalten sind. Die Röhren 4 sind über Durchführungen 6 des Gehäuses 1 mit elektrischen Anschlüssen zur Spannungsversorgung kontaktiert. Zwischen dem Einlassbereich 2 und dem in Strömungsrichtung des Trinkwassers nächstliegendem Ende der Röhren 4 ist ein Mittel zur Homogenisierung des Trinkwasserstroms 7 angeordnet. Dieses Mittel ist in Fig. 1 lediglich schematisch als zylindrischer Raumabschnitt zwischen Einlassbereich 2 und dem Beginn der Röhren 4 dargestellt.

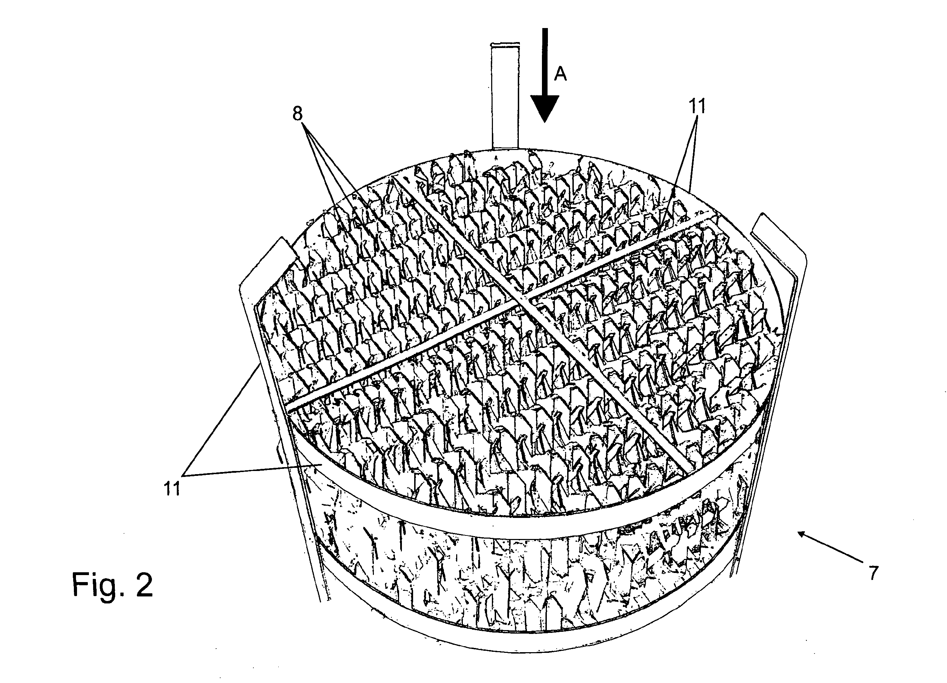

Bei dem als Modul ausgebildeten Mittel 7 handelt es sich um eine strukturierte Packung, wie sie sonst in Rektifizierkolonnen Verwendung findet. Eine solche Packung 7 ist in Fig. 2 dargestellt. Die Packung 7 hat eine im wesentlichen zylindrische einhüllende Form, wobei die Symmetrieachse des Zylinders mit der Symmetrieachse des Gehäuses 1 zusammenfällt. Das Mittel 7 umfasst eine Anzahl von etwa zwei Dutzend strukturierten Blechen 8, die parallel zueinander stapelartig angeordnet sind. Die Ebenen der strukturierten Bleche 8 sind dabei im wesentlichen parallel zu der Hauptströmungsrichtung des Trinkwassers ausgerichtet. Die Packung 7 umfasst zudem ein Traggerüst bildende Blechstreifen 11 zur Halterung und Positionierung der Packung.

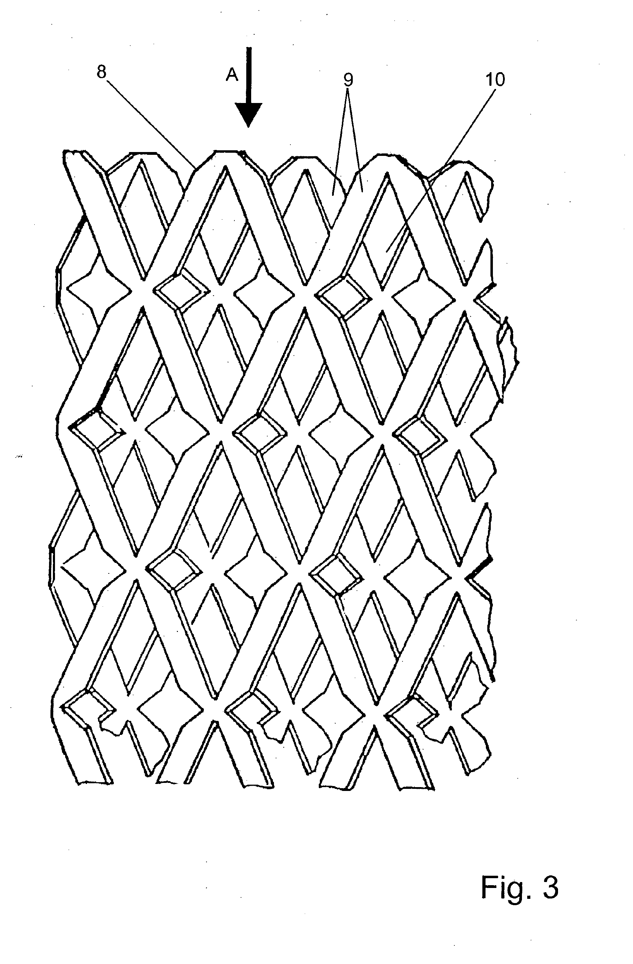

Jedes der Bleche 8 ist ein Streckmetall-Blechteil (siehe Fig. 3). Durch Stanzung wird ein ursprünglich einfaches Blech perforiert und durch Streckung zu den strukturierten Blechteilen gemäß Fig. 3 ausgeformt. Fig. 3 zeigt zwei aufeinanderliegende Bleche 8, die einen gleiche wiederholte Struktur und einen definierten Versatz zueinander haben. Jedes der Bleche 8 umfasst ein Gitter aus Stegen oder Lamellen 9, wobei zwischen den Stegen 9 stern- oder rhombenartige Öffnungen 10 verbleiben. Die einzelnen Stege 9 oder Teile von ihnen sind verwunden, um die Gesamtstruktur weiter zu optimieren. Die Strömungsrichtung des Trinkwassers entspricht dem Pfeil A gemäß Fig. 3. Zu der genauen Ausbildung der Blechteile und Packungen sowie üblichen Abwandlungen wird ausdrücklich auf die Druckschrift EP 0 069 241 B1 verwiesen.

Bei der bevorzugten strukturierten Packung für Rektifizierkolonnen, wie sie auch in Fig. 2 dargestellt ist, handelt es sich um ein Produkt der Serie "Rombopak 4M" der Firma Kühni AG, Gewerbestraße 28, CH-4123 Allschwil 2, Schweiz (Internet: www.kuhni.ch). Grundsätzlich haben sich sämtliche Rombopak-Produkte der Firma Kühni AG als sehr gut geeignet für die Strömungsvereinheitlichung in Trinkwasser-Desinfektionsanlagen gezeigt. Das Produkt "Rombopak 4M" ist bezüglich der Strukturdichte in besonderem Maße geeignet, da seine noch ausreichend hohe, im Vergleich zu den anderen Produkten jedoch kleinere Strukturdichte bzw. innere Oberfläche einen ausreichenden Anteil von UV-Strahlung auf die einzelnen Oberflächen der strukturierten Bleche 8 zulässt, so dass die Bildung von Keimen auf den Oberflächen auch bei langer Betriebsdauer vermieden wird.

Die Erfindung funktioniert nun wie folgt:

Das gemäß Pfeil A in Fig. 3 bzw. in Richtung der Zylinderachse des Gehäuses 1 einströmende Trinkwasser hat zunächst im Einlassbereich des Gehäuses 1 eine recht inhomogene Strömungsverteilung, wobei schnellströmende und langsamströmende Bereiche vorliegen. Durch die einzelnen Stege 9 wird der Trinkwasserstrom in viele einzelne Strömungspfade aufgeteilt, welche nachfolgend bei Durchlaufen der Packung umgelenkt werden. Innerhalb und am Ende der Packung werden diese aufgeteilten und räumlich versetzten Teilströme wieder zusammengeführt. Hierdurch wird die Trinkwasserströmung über den gesamten Querschnitt des Gehäuses 1 sehr gut vereinheitlicht, ohne dass unnötig viele Turbulenzen erzeugt werden. Versuche haben ergeben, dass bei typischen kleineren bis mittelgroßen Anlagen, die im Normalbetrieb Volumenströme von typisch 15 bis 30 Kubikmeter pro Stunde aufweisen, eine gute Homogenisierung der Strömung erzielt wurde, wobei ein totaler Druckabfall über der Vorrichtung im Bereich von lediglich 50 mbar lag.

## Patentansprüche

1. Vorrichtung zur Behandlung eines strömenden Fluids, insbesondere Wasser, umfassend
ein Gehäuse (1) mit einem Einlass (2) zur Zuführung des Fluids und einem Auslass (3) zur Abführung des Fluids,
ein Element (4) zur Erzeugung von Strahlung, insbesondere UV-Strahlung, wobei die Strahlung zumindest auf einen Teil des strömenden Fluids einwirkt, und
ein Mittel (7) zur Beeinflussung der Fluidströmung innerhalb des Gehäuses (1),
**dadurch gekennzeichnet,**
**dass** das Mittel (7) zur Beeinflussung der Fluidströmung als Modul mit einer Mehrzahl von strukturierten Blechen (8) ausgebildet ist.

2. Vorrichtung nach Anspruch 1, **dadurch gekennzeichnet, dass** die Bleche (8) im wesentlichen parallel zueinander angeordnet sind, wobei eine Hauptströmungsrichtung (A) des Fluids im wesentlichen parallel zu den Blechen (8) verläuft.

3. Vorrichtung nach einem der vorhergehenden Ansprüche, **dadurch gekennzeichnet, dass** eine einhüllende äußere Form des Moduls (7) im wesentlichen zylindrisch ist.

4. Vorrichtung nach einem der vorhergehenden Ansprüche, **dadurch gekennzeichnet, dass** die strukturierten Bleche (8) als Streckmetall-Bleche ausgebildet sind.

5. Vorrichtung nach Anspruch 4, **dadurch gekennzeichnet, dass** die Streckmetall-Bleche im wesentlichen rhombenförmige Öffnungen (10) aufweisen.

6. Vorrichtung nach Anspruch 4 oder 5, **dadurch gekennzeichnet, dass** die Streckmetall-Bleche (8) Stege (9) aufweisen, die gegenüber einer Hauptebene der Bleche (8) verwunden sind.

7. Vorrichtung nach einem der vorhergehenden Ansprüche, **dadurch gekennzeichnet, dass** die Bleche (9) eine Strömungstrennung eines Hauptstroms des Fluids in mehrere Teilströme, deren Umlenkung und abschließende Zusammenführung bewirken.

8. Vorrichtung nach einem der vorhergehenden Ansprüche, **dadurch gekennzeichnet, dass** die Vorrichtung eine UV-Desinfektionsanlage zur Behandlung von Trinkwasser ist.

9. Vorrichtung nach Anspruch 8, **dadurch gekennzeichnet, dass** der Trinkwasserstrom in einem normalen Betriebszustand wenigstens etwa 10 Kubikmeter pro Stunde beträgt, wobei der gesamte Druckabfall des Trinkwasserstroms über der Vorrichtung weniger als etwa 100 mbar beträgt.

10. Vorrichtung nach einem der vorhergehenden Ansprüche, **dadurch gekennzeichnet, dass** das Gehäuse (1) im wesentlichen zylindrisch ist, wobei der Einlass (2) und der Auslass (3) an entgegengesetzten Endbereichen des Gehäuses angeordnet sind.

11. Vorrichtung nach einem der vorhergehenden Ansprüche, **dadurch gekennzeichnet, dass** das Element (4) zur Erzeugung von Strahlung eine im wesentlichen stangeförmige UV-Röhre ist, die im wesentlichen entlang einer Hauptströmungsrichtung des Fluids orientiert ist.

12. Vorrichtung nach einem der vorhergehenden Ansprüche, **dadurch gekennzeichnet, dass** das Mittel (7) zur Beeinflussung der Fluidströmung eine strukturierte Packung für Absorptionskolonnen und/oder Extraktionskolonnen und/oder Rektifizierkolonnen umfasst.

13. Vorrichtung nach Anspruch 12, **dadurch gekennzeichnet, dass** die Packung (7) eine Oberfläche von etwa 100 Quadratmeter bis etwa 500 Quadratmeter pro Kubikmeter Volumen aufweist.

14. Vorrichtung nach Anspruch 13, **dadurch gekennzeichnet, dass** die Oberfläche zwischen etwa 100 Quadratmeter und etwa 200 Quadratmeter pro Kubikmeter Volumen beträgt.

15. Vorrichtung nach einem der vorhergehenden Ansprüche, **dadurch gekennzeichnet, dass** die strukturierten Bleche (8) aus einem nicht-korrosivem Material, insbesondere trinkwassergeeignetem Edelstahl, bestehen.

16. Vorrichtung nach Anspruch 15, **dadurch gekennzeichnet, dass** zumindest die Oberfläche der Bleche (8) ein keimtötendes Material, insbesondere Silber, umfasst.

17. Verwendung einer strukturierten Packung für Absorptionskolonnen und/oder Extraktionskolonnen und/oder Rektifizierkolonnen als Mittel zur Beeinflussung der Strömung von Wasser, insbesondere Trinkwasser, in einer Vorrichtung zur Desinfizierung des Wassers mittels UV-Strahlung, insbesondere nach einem der Ansprüche 1 bis 16.
